# EUROPEAN PATENT APPLICATION

(11) **EP 4 465 680 A1**
(43) Date of publication of application: **20.11.2024**
(21) Application number: 23766029.5
(22) Date of filing: 08.03.2023
(51) Int. Cl.: H04W 24/02

(54) **COMMUNICATION METHOD AND APPARATUS AND STORAGE MEDIUM**

(30) Priority: 08.03.2022 CN 202210219318
(71) Applicant: Huawei Technologies Co., Ltd., Shenzhen, Guangdong 518129 (CN)
(72) Inventor: PAN, Xiaodan, Shenzhen, Guangdong 518129 (CN); PENG, Wenjie, Shenzhen, Guangdong 518129 (CN); WANG, Rui, Shenzhen, Guangdong 518129 (CN); SHI, Yulong, Shenzhen, Guangdong 518129 (CN)
(74) Representative: Maiwald GmbH
(86) International application number: PCT/CN2023/080213
(87) International publication number: WO 2023/169451

(57) **Abstract**

This application relates to the field of communication technologies, and provides a communication method and apparatus, and a storage medium, to resolve a problem of a conflict between different configurations of a terminal device. In this application, a first communication apparatus receives a first message from a network device. The first message includes first configuration information. The first communication apparatus receives or sends a discovery (discovery) message. The first communication apparatus performs measurement based on the first configuration information by receiving or sending the discovery message. The measurement is measurement on signal quality of a sidelink between the first communication apparatus and a second communication apparatus. The first communication apparatus sends measurement information of the measurement to the network device.

## Description

This application claims priority to Chinese Patent Application No. 202210219318.3, filed with the China National Intellectual Property Administration on March 8, 2022 and entitled "COMMUNICATION METHOD AND APPARATUS, AND STORAGE MEDIUM", which is incorporated herein by reference in its entirety.

### TECHNICAL FIELD

This application relates to the field of communication technologies, and in particular, to a communication method and apparatus, and a storage medium.

### BACKGROUND

In a UE-to-Network Relay (UE-to-Network Relay, U2N Relay) communication system, a remote terminal (remote UE) may communicate with a network via a relay terminal (relay UE). The remote terminal communicates with the relay terminal through a sidelink (sidelink, SL), and a corresponding interface is referred to as PC5. The relay terminal is directly connected to a network device, and communicates with the network device through an air interface (for example, a Uu interface).

In the U2N relay communication system, the remote terminal may measure communication quality of a current serving cell and communication quality of a sidelink between the remote terminal and a neighboring relay terminal based on a configuration of the network device, to facilitate mobility management. For example, the remote terminal may receive configuration information of the network device, and work based on the configuration information, for example, perform measurement or receive/send a discovery (discovery) message. In addition, in the U2N relay communication system, the remote terminal needs to meet a threshold condition of the Uu interface to receive/send the discovery message.

When the remote terminal receives the configuration information of the network device and does not meet the threshold condition for receiving/sending the discovery message, if the remote terminal works based on the configuration information of the network device, the remote terminal may perform measurement and report measurement information, or if the remote terminal works based on the threshold condition for receiving/sending the discovery message, the remote terminal cannot receive/send the discovery message, and therefore cannot perform measurement or report measurement information. How to resolve a conflict between different configurations of the remote terminal becomes an urgent problem to be resolved.

### SUMMARY

This application provides a communication method and apparatus, and a storage medium, to resolve a problem of a conflict between different configurations of remote UE.

A first aspect of embodiments of this application provides a communication method. The method includes: receiving a first message from a network device, where the first message includes first configuration information; receiving or sending a discovery (discovery) message; performing measurement based on the first configuration information by receiving or sending the discovery message, where the measurement is measurement on signal quality of a sidelink between a first communication apparatus and a second communication apparatus; and sending measurement information of the measurement to the network device.

Based on the method, according to the communication method and the apparatuses provided in this embodiment of this application, remote UE performs measurement and reporting based on the received first configuration information. This is not constrained by a threshold condition configured by a base station or preconfigured for receiving/sending the discovery message. In this way, a problem of a conflict between different configurations of the remote terminal is resolved.

With reference to the first aspect, in some implementations of the first aspect, the receiving or sending a discovery message includes: receiving or sending the discovery message when a reference signal received power (RSRP) is less than a first threshold. The RSRP is an RSRP of an air interface between the first communication apparatus and the network device.

According to the communication method and the apparatuses provided in this embodiment of this application, the remote UE performs measurement and reporting based on the received first configuration information, and detects whether a constraint of the threshold condition configured by the base station or preconfigured for receiving/sending the discovery message is met. In this way, the problem of the conflict between different configurations of the remote terminal is resolved.

With reference to the first aspect, in some implementations of the first aspect, the receiving or sending a discovery message includes: receiving or sending the discovery (discovery) message when the first configuration message is received.

With reference to the first aspect, in some implementations of the first aspect, the first message further includes second configuration information, and the second configuration information is used to reconfigure the first threshold or release the first threshold.

With reference to the first aspect, in some implementations of the first aspect, the method further includes: sending a second message to the second communication apparatus. The second message includes switching indication information, the switching indication information indicates that switching is completed, and the switching is switching of the first communication apparatus from the network device to the second communication apparatus.

With reference to the first aspect, in some implementations of the first aspect, the second message includes a local identity (local ID) of the first communication apparatus and a bearer identity corresponding to the second message.

A second aspect of embodiments of this application provides a communication method. The method includes: sending a first message to a first communication apparatus. The first message includes first configuration information, and the first configuration information indicates the first communication apparatus to perform measurement. The first message further includes second configuration information, and the second configuration information is used to reconfigure a first threshold or release a first threshold.

According to the communication method and the apparatuses provided in this embodiment of this application, a threshold condition for receiving/sending a discovery message is configured by a base station, to enable a constraint of the threshold condition for receiving/sending the discovery message by remote UE. In this way, a problem of a conflict between different configurations of the remote terminal is resolved.

With reference to the second aspect, in some implementations of the second aspect, a third message is sent to a second communication apparatus. The third message includes configuration information used to forward a second message.

A third aspect of embodiments of this application provides a communication method. The method includes: receiving a second message from a first communication apparatus, where the second message includes switching indication information, the switching indication information indicates that switching is completed, and the switching is switching of the first communication apparatus from a network device to a second communication apparatus; storing the second message; and receiving a third message from the network device, where the third message includes configuration information used to forward the second message.

With reference to the third aspect, in some implementations of the third aspect, the second message includes a local identity (local ID) of the first communication apparatus and a bearer identity corresponding to the second message.

With reference to the third aspect, in some implementations of the third aspect, the method further includes: determining, based on the bearer identity corresponding to the second message, that the second message includes the switching indication information.

With reference to the third aspect, in some implementations of the third aspect, the third message is: a 1^{st} radio resource control (RRC) message received from the network device after the second message is received; a 1^{st} RRC message received after the second communication apparatus enters a connected state from an idle (idle) state or an inactive (inactive) state; or a 1^{st} RRC message including a sidelink relay adaptation protocol (SRAP) configuration.

With reference to the third aspect, in some implementations of the third aspect, the configuration information used to forward the second message includes a mapping relationship among the local ID of the first communication apparatus, the bearer identity corresponding to the second message, and a radio link control (RLC) bearer.

With reference to the third aspect, in some implementations of the third aspect, the method further includes: setting a timer, starting the timer when the second communication apparatus receives the second message, and discarding the second message if the timer expires and the second communication apparatus does not receive the third message.

With reference to the third aspect, in some implementations of the third aspect, the method further includes: setting a timer, starting the timer when the second communication apparatus receives the second message, and sending first indication information to the first communication apparatus if the timer expires and the second communication apparatus does not receive the third message. The first indication information indicates the first communication apparatus to reselect a relay device.

A fourth aspect of embodiments of this application provides a communication apparatus, including a module configured to perform the method described in the first aspect or any one of the possible implementations of the first aspect.

A fifth aspect of embodiments of this application provides a communication apparatus, including a module configured to perform the method described in the second aspect or any one of the possible implementations of the second aspect.

A sixth aspect of embodiments of this application provides a communication apparatus, including a module configured to perform the method described in the third aspect or any one of the possible implementations of the third aspect.

A seventh aspect of embodiments of this application provides a communication apparatus, including a processor and an interface circuit. The interface circuit is configured to receive a signal from an apparatus other than the apparatus and transmit the signal to the processor, or send a signal from the processor to an apparatus other than the apparatus. The processor is configured to implement the method described in the first aspect or the possible implementations of the first aspect by using a logic circuit or by executing code instructions.

An eighth aspect of embodiments of this application provides a communication apparatus, including a processor and an interface circuit. The interface circuit is configured to receive a signal from an apparatus other than the apparatus and transmit the signal to the processor, or send a signal from the processor to an apparatus other than the apparatus. The processor is configured to implement the method described in the second aspect or the possible implementations of the second aspect by using a logic circuit or by executing code instructions.

A ninth aspect of embodiments of this application provides a communication apparatus, including a processor and an interface circuit. The interface circuit is configured to receive a signal from an apparatus other than the apparatus and transmit the signal to the processor, or send a signal from the processor to an apparatus other than the apparatus. The processor is configured to implement the method described in the third aspect or the possible implementations of the third aspect by using a logic circuit or by executing code instructions.

A tenth aspect of embodiments of this application provides a computer-readable storage medium. The computer-readable storage medium stores a computer program or instructions. When the computer program is executed or the instructions are executed by a computing device, the method described in the first aspect or the possible implementations of the first aspect is implemented, the method described in the second aspect or the possible implementations of the second aspect is implemented, or the method described in the third aspect or the possible implementations of the third aspect is implemented.

An eleventh aspect of embodiments of this application provides a computer program product. The computer program product includes a computer program or instructions. When the computer program or the instructions are executed by a communication apparatus, the method described in the first aspect or the possible implementations of the first aspect is implemented, the method described in the second aspect or the possible implementations of the second aspect is implemented, or the method described in the third aspect or the possible implementations of the third aspect is implemented.

A twelfth aspect of embodiments of this application provides a communication system. The communication system includes one or more of the following: the communication apparatus provided in the fourth aspect, the fifth aspect, the sixth aspect, the seventh aspect, the eighth aspect, or the ninth aspect, the computer-readable storage medium provided in the tenth aspect, or the computer program product provided in the eleventh aspect.

### BRIEF DESCRIPTION OF DRAWINGS

FIG. 1a is a possible diagram of a communication system to which an embodiment of this application is applicable;
FIG. 1b is a diagram of a possible application scenario of a sidelink between terminal devices according to an embodiment of this application;
FIG. 1c is a diagram of another possible application scenario of a sidelink between terminal devices according to an embodiment of this application;
FIG. 2 is a diagram of a protocol architecture of a discovery message according to an embodiment of this application;
FIG. 3A is a diagram of a scenario of a discovery process according to an embodiment of this application;
FIG. 3B is a diagram of a scenario of another discovery process according to an embodiment of this application;
FIG. 4A is an interaction diagram of a unicast connection establishment process according to an embodiment of this application;
FIG. 4B is an interaction diagram of another unicast connection establishment process according to an embodiment of this application;
FIG. 5 is a diagram of a scenario of switching from direct communication to indirect communication according to an embodiment of this application;
FIG. 6 is an interaction diagram of a communication method according to an embodiment of this application;
FIG. 7 is an interaction diagram of another communication method according to an embodiment of this application;
FIG. 8 is an interaction diagram of still another communication method according to an embodiment of this application;
FIG. 9 is an interaction diagram of still another communication method according to an embodiment of this application;
FIG. 10 is a block diagram of a communication apparatus according to an embodiment of this application; and
FIG. 11 is another block diagram of a communication apparatus according to an embodiment of this application.

### DESCRIPTION OF EMBODIMENTS

In the specification, claims, and accompanying drawings of this application, the terms "first", "second", and the like are merely intended to distinguish between different objects, but do not limit a sequence, a time sequence, a priority, or an importance degree of a plurality of objects. In embodiments of this application, "a plurality of' refers to two or more than two. In addition, terms such as "include", "have", and any other variants thereof are intended to cover a non-exclusive inclusion. For example, processes, methods, systems, products, devices, or the like that include a series of steps or units are not limited to listed steps or units, but instead, optionally further include steps or units that are not listed, or optionally further include other steps or units inherent to these processes, methods, products, devices, or the like. In addition, the character "/", unless otherwise specified, generally indicates an "or" relationship between the associated objects.

"Embodiment" mentioned in this specification mean that a specific feature, structure, or characteristic described in combination with this embodiment may be included in at least one embodiment of this application. The phrase shown in various locations in the specification may not necessarily be a same embodiment, or an independent or optional embodiment exclusive from another embodiment. It may be understood explicitly and implicitly by a person skilled in the art that embodiments described in the specification may be combined with another embodiment.

The technical solutions in embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), and a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WIMAX) communication system, a 5th generation (5th generation, 5G) system or new radio (new radio, NR), or applied to a future communication system or another similar communication system, a next generation wireless local area network system, or the like.

In addition, the technical solutions provided in embodiments of this application may be applied to a sidelink (sidelink, SL). The sidelink is applied in a plurality of scenarios, for example, may be applied to a cellular link, a link between devices, for example, a device-to-device (device-to-device, D2D) link, or a vehicle-to-everything (vehicle-to-everything, V2X) scenario.

For example, D2D may be D2D in a long term evolution (long term evolution, LTE) communication system, D2D in a new radio (new radio, NR) communication system, or D2D in another communication system that may emerge as technologies develop.

Similarly, V2X may be LTE V2X, NR V2X, or V2X in another communication system that may emerge as technologies develop.

For example, the V2X scenario may be specifically any one of the following systems: vehicle-to-vehicle (vehicle-to-vehicle, V2V) communication, vehicle-to-pedestrian (vehicle-to-pedestrian, V2P) communication, a vehicle-to-network (vehicle-to-network, V2N) service, and vehicle-to-infrastructure (vehicle-to-infrastructure, V2I) communication.

In V2N, one participant is a terminal device, and the other participant is a service entity. V2N is currently the most widely used form of internet of vehicles, and a main function of V2N is to enable a vehicle to connect to a cloud server via a mobile network, so as to provide functions such as navigation, entertainment, anti-theft or the like via the cloud server.

Both participants in V2V are terminal devices. V2V may be for information exchange and reminding between vehicles, and the most typical application is an anti-collision safety system between vehicles.

Both participants in V2P are terminal devices. V2P may be for providing a safety warning for a pedestrian or a non-motorized vehicle on a road.

In V2I, one participant is a terminal device, and the other participant is an infrastructure (or a road facility). V2I may be for communication between a vehicle and an infrastructure. For example, the infrastructure may be a road, a traffic light, or a roadblock, and road management information such as a traffic light signal time sequence may be obtained.

The sidelink (sidelink, SL) in embodiments of this application may also be referred to as a side link, a sidelink, a direct link, a sidelink, a secondary link, or the like. In embodiments of this application, the foregoing terms refer to links established between devices of a same type, and have a same meaning. The link between devices of a same type may be a link between terminal devices, a link between base stations, a link between relay nodes, or the like. This is not limited in embodiments of this application. For the link between the terminal devices, there is a D2D link defined in 3GPP Release (Rel)-12/13, and there is also a vehicle to vehicle, vehicle to mobile phone, or vehicle to any entity V2X link defined by 3GPP for an internet of vehicles, including the Rel-14/15, and further includes a V2X link based on an NR system in Rel-16 and subsequent releases that are currently being researched by 3GPP, or the like

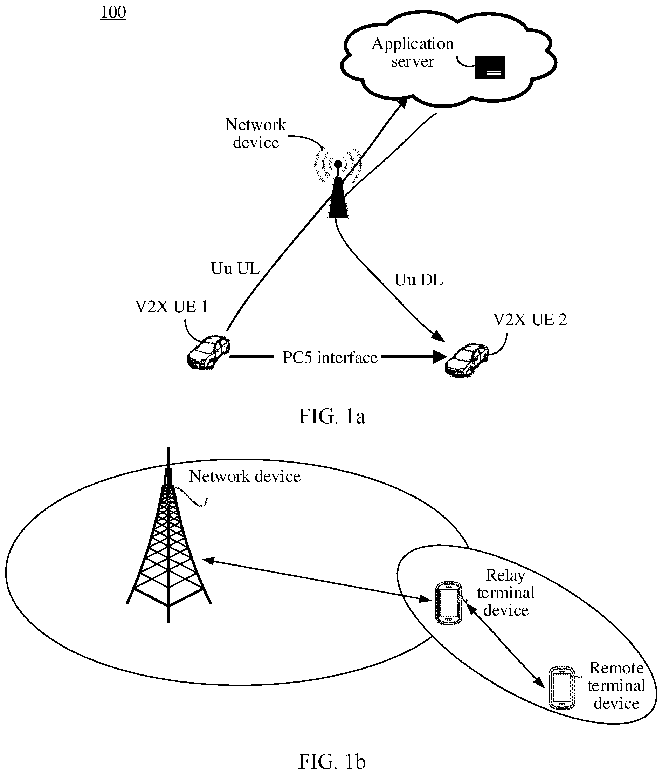

FIG. 1a is a possible diagram of a communication system to which an embodiment of this application is applicable. As shown in FIG. 1a, the communication system 100 includes a network device and a terminal device (for example, UE 1 and UE 2).

The terminal device in this embodiment of this application may also be referred to as user equipment (user equipment, UE), a mobile station (mobile station, MS), a mobile terminal (mobile terminal, MT), or the like, and is a device that provides voice or data connectivity for a user, or may be an internet of things device. For example, the terminal device includes a handheld device, a vehicle-mounted device, or the like that has a wireless connection function. The terminal device may be a mobile phone (mobile phone), a tablet computer, a notebook computer, a palmtop computer, a mobile internet device (mobile internet device, MID), a wearable device (for example, a smartwatch, a smart band, or a pedometer), a vehicle-mounted device (for example, an automobile, a bicycle, an electric vehicle, an aircraft, a ship, a train, a high-speed train, or the like), a virtual reality (virtual reality, VR) device, an augmented reality (augmented reality, AR) device, a wireless terminal in industrial control (industrial control), a smart home device (for example, a refrigerator, a television, an air conditioner, an electricity meter, or the like), an intelligent robot, a workshop device, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a flight device (for example, an intelligent robot, a hot balloon, an uncrewed aerial vehicle, or an aircraft), or the like. In this embodiment of this application, devices implementing the foregoing functions are uniformly described by using the terminal device as an example. It should be understood that the terminal device in this embodiment of this application may alternatively be a chip in a terminal, a communication apparatus having a D2D or V2X communication function, a unit, a module or the like, for example, an in-vehicle communication apparatus, an in-vehicle communication module, an in-vehicle communication chip, or the like. In FIG. 1a, an example in which terminal devices are V2X UE 1 and V2X UE 2 is used for presentation.

The network device in this embodiment of this application is a device that connects a terminal device to a wireless network. The network device may be a node in a radio access network, and may also be referred to as a base station, or may be referred to as a radio access network (radio access network, RAN) node (or device). The network device may be configured to mutually convert a received over-the-air frame and an internet protocol (IP) packet and serve as a router between the terminal device and a rest portion of the access network. The rest portion of the access network may include an IP network. The network device may further coordinate attribute management of an air interface. For example, the network device may include a long term evolution (long term evolution, LTE) system or an evolved NodeB (NodeB, eNB, or e-NodeB, evolved NodeB) in an LTE-advanced (LTE-Advanced, LTE-A) system, may include a next generation NodeB (next generation NodeB, gNB) in a 5th generation (5th generation, 5G) mobile communication technology new radio (new radio, NR) system, may include a transmission reception point (transmission reception point, TRP), a home base station (for example, a home evolved NodeB, or a home NodeB, HNB), a baseband unit (baseband unit, BBU), a Wi-Fi access point (access point, AP), or the like, or may include a central unit (central unit, CU) and a distributed unit (distributed unit, DU) in a cloud radio access network (cloud radio access network, CloudRAN) system. This is not limited in this embodiment of this application. For another example, a network device in a V2X technology is a road side unit (road side unit, RSU). The RSU may be a fixed infrastructure entity supporting a V2X application, and may exchange a message with another entity supporting the V2X application. In FIG. 1a, an example in which the network device is a base station is used for presentation.

Further, the communication system 100 further includes an application server. The communication system 100 includes two types of communication interfaces: a PC5 interface and a Uu interface.

The PC5 interface is a direct communication interface between terminal devices, and a direct communication link between the terminal devices is a sidelink, and is used for communication between the terminal devices. At least one of the following channels may be used for sidelink-based communication: a physical sidelink shared channel (physical sidelink shared channel, PSSCH) used to carry data (data); or a physical sidelink control channel (physical sidelink control channel, PSCCH) used to carry sidelink control information (sidelink control information, SCI), where the SCI is also referred to as scheduling assignment (scheduling assignment, SA).

The Uu interface is a communication interface between a terminal device and a network device, and a communication link between the terminal device and the network device includes an uplink (uplink, UL) and a downlink (downlink, DL). Uu interface-based communication may be as follows: A transmitter terminal device sends data to a network device through a Uu interface, and the network device sends the data to an application server for processing. Then, the application server delivers processed data to the network device, and the network device sends the processed data to a receiver terminal device.

It should be noted that, in a Uu interface-based communication manner, a network device that forwards uplink data from the transmitter terminal device to the application server and a network device that forwards downlink data delivered by the application server to the receiver terminal device may be a same network device, or may be different network devices. This may be specifically determined by the application server.

In embodiments of this application, sidelink transmission is performed between terminal devices in a plurality of scenarios. FIG. 1b is an example of a diagram of a possible application scenario of a sidelink between terminal devices according to an embodiment of this application. As shown in FIG. 1b, sidelink transmission between terminal devices may alternatively include transmission between a remote terminal device (remote UE) and a relay terminal device (relay UE) in a sidelink UE-to-Network Relay (sidelink UE-to-Network Relay, U2N Relay) scenario.

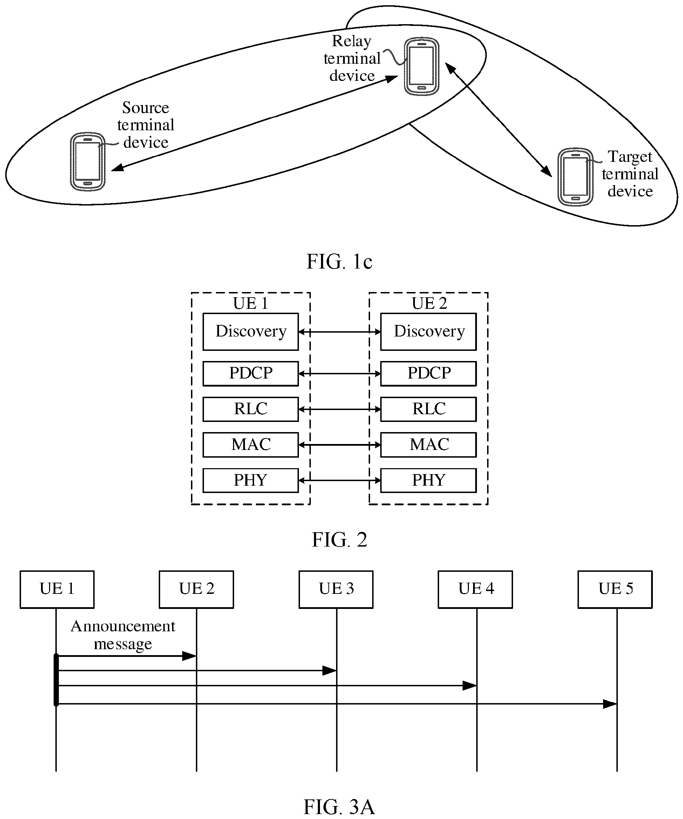

FIG. 1c is an example of a diagram of another possible application scenario of sidelink transmission between terminal devices according to an embodiment of this application. As shown in FIG. 1c, sidelink transmission between terminal devices may alternatively include transmission between a source terminal device (source UE) and a relay terminal device (relay UE) in a sidelink terminal device-to-terminal device relay (Sidelink UE-to-UE Relay) scenario, or may include transmission between a relay terminal device (relay UE) and a target terminal device (target UE).

Sidelink-based transmission performed between a first terminal device and a second terminal device in the solutions provided in embodiments of this application may be sidelink transmission between the V2X UE 1 and the V2X UE 2 shown in FIG. 1a, may be the sidelink transmission between the remote terminal device (remote UE) and the relay terminal device (relay UE) in the scenario shown in FIG. 1b, may be the sidelink transmission between the source terminal device (source UE) and the relay terminal device (relay UE) in FIG. 1c, or may be the sidelink transmission between the relay terminal device (relay UE) and the target terminal device (target UE) in FIG. 1c.

For example, in sidelink communication, broadcast, unicast, and multicast communication manners may be supported.

Broadcast communication may be similar to broadcasting system information by a network device. In other words, a sending terminal sends broadcast service data to outside without encryption, and other terminal devices that are in an effective reception range of the sending terminal and that are interested in a broadcast service may receive the broadcast service data.

In unicast communication, a unicast connection needs to be first established between two terminal devices. This is similar to data communication performed after an RRC connection is established between a terminal device and a network device. After the unicast connection is established, the two terminal devices may perform data communication based on a negotiated identity, and the data may be encrypted or may not be encrypted. Compared with the broadcast communication, in the unicast communication, unicast communication can be performed only between two UEs between which a unicast connection is established.

Multicast communication is communication between all terminal devices in one communication group. In the multicast communication, any terminal device in one communication group may receive or send multicast service data. For example, one terminal device in one communication group sends one piece of multicast service data, and other terminal devices in the communication group may receive the multicast service data. The terminal device may also receive multicast service data sent by other terminal devices in the communication group.

It should be understood that the communication manners supported by the sidelink are merely examples. Communication manners supported by the sidelink in embodiments of this application are not limited to the foregoing three examples, and may alternatively include another new communication manner that appears as technologies develop. Therefore, the three communication manners shown above should not be understood as a limitation on implementation of this application.

In the sidelink communication, sidelink communication performed once corresponds to a pair of source layer-2 identity (source layer-2 identity, L2 ID) and destination L2 ID. In other words, sidelink communication performed once needs one source L2 ID and one destination L2 ID. The source L2 ID and the destination L2 ID may be included in a subheader of a MAC data protocol unit (protocol data unit, PDU), so that data can be transmitted from a sending terminal to a correct receiving terminal.

For example, the source L2 ID is allocated by the sending terminal (or referred to as a source terminal). For example, the sending terminal may select different source L2 IDs based on a communication type and a standard. The communication type may include unicast communication, broadcast communication, and multicast communication, and the standard may include long term evolution (long term evolution, LTE) or new radio (new radio, NR). In some implementations, the sending terminal may periodically update the source L2 ID, to protect privacy of a sidelink service type (service type) and avoid being tracked and identified by another terminal device.

For example, the destination L2 ID may depend on the service type. The sending terminal may determine a correspondence between the destination L2 ID and a broadcast service, a multicast service, or a unicast service based on a manner such as pre-configuration, application layer server configuration, core network configuration, or the like. For example, in a broadcast communication or multicast communication process, the sending terminal may determine a destination L2 ID based on a broadcast service type or a multicast service type. In the unicast communication, the sending terminal first establishes a unicast connection with a receiving terminal (or referred to as a target terminal). For example, in a unicast connection establishment process, the sending terminal may select a default destination L2 ID. The default destination L2 ID is related to a service type of the unicast communication. After establishment of the unicast connection is completed, the sending terminal may continue to apply the default destination L2 ID for the unicast communication.

For example, a terminal device supporting a proximity-based service (proximity-based service, ProSe) may discover, by using a discovery process, a neighboring connectable terminal device, and establish a unicast connection with the terminal device, so that communication is subsequently performed based on the unicast connection.

### (1) Discovery process

A protocol stack of a discovery message is shown in FIG. 2. Peer protocol layers established between UE 1 and UE 2 include a discovery (discovery) protocol layer, a PDCP layer, an RLC layer, a MAC layer, and a PHY layer. A discovery message of the UE 1 may be generated by the discovery protocol layer, and is sent to the UE 2 after being processed by the PDCP layer, the RLC layer, the MAC layer, and the PHY layer in sequence. The UE 2 obtains the discovery message through the processing of the PHY layer, the MAC layer, the RLC layer, and the PDCP layer in sequence.

For example, the discovery process may include two discovery models: a first discovery model and a second discovery model. For example, in the first discovery model, the terminal device may include an announcing terminal (announcing UE) and a monitoring terminal (monitoring UE). The announcing terminal broadcasts a discovery message. The discovery message may carry a source L2 ID and a destination L2 ID. For example, the source L2 ID may be allocated by the announcing terminal, and the destination L2 ID may be a predefined or preconfigured destination L2 ID. The discovery message may also be referred to as an announcement message (announcement message), and the announcement message may carry information about the announcing terminal. For example, the announcement message may include information about a service type. The information indicates a type of a service that can be provided by the announcing terminal, so that the monitoring terminal determines, based on the announcement message, whether the service provided by the announcing terminal is needed. The monitoring terminal monitors the announcement message broadcast by the announcing terminal. After receiving the announcement message broadcast by the announcing terminal, the monitoring terminal may determine, based on information carried in the announcement message, whether the service provided by the announcing terminal is needed, that is, determine whether to establish a unicast connection with the announcing terminal. FIG. 3A shows an example of a first discovery model according to an embodiment of this application. The first discovery model may include a plurality of terminal devices. FIG. 3A shows five terminal devices: UE 1, UE 2, UE 3, UE 4, and UE 5. The UE 1 is an announcing terminal, and the UE 2, the UE 3, the UE 4, and the UE 5 are monitoring terminals. The UE 1 broadcasts an announcement message. The UE 2, the UE 3, the UE 4, and the UE 5 monitor the announcement message, and after receiving the announcement message, determine, based on information carried in the announcement message, whether to establish unicast connections with the UE 1.

For example, in a second discovery model, a terminal device may include a discoverer terminal (discoverer UE) and a discoveree terminal (discoveree UE). The discoverer terminal may broadcast a discovery message. The discovery message may carry a source L2 ID and a destination L2 ID. For example, the source L2 ID may be allocated by the discoverer terminal, and the destination L2 ID may be a predefined or preconfigured destination L2 ID. The discovery message may also be referred to as a solicitation message (solicitation message), and the solicitation message carries information about a type of a service needed by the discoverer terminal. The discoveree terminal monitors the solicitation message broadcast by the discoverer terminal, and determines whether the service needed by the discoverer terminal can be provided after receiving the solicitation message. The discoveree terminal sends a response message to the discoverer terminal when determining that the service needed by the discoverer terminal can be provided.

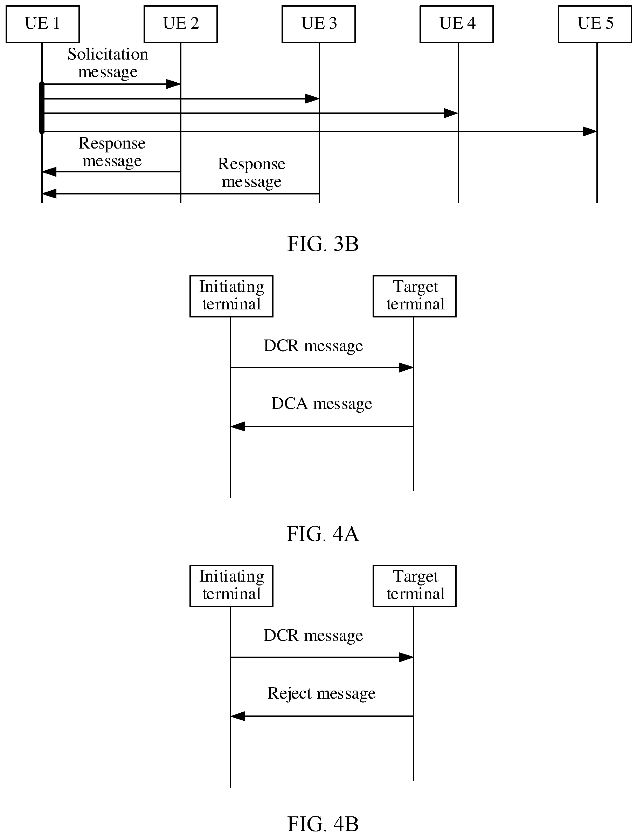

FIG. 3B shows an example of a second discovery model according to an embodiment of this application. The second discovery model may include a plurality of terminal devices. FIG. 3B shows five terminal devices: UE 1, UE 2, UE 3, UE 4, and UE 5. The UE 1 is a discoverer terminal, and the UE 2, the UE 3, the UE 4, and the UE 5 are discoveree terminals. The UE 1 broadcasts a solicitation message. The solicitation message may include a service requirement of the UE 1. The UE 2, the UE 3, the UE 4, and the UE 5 monitor the solicitation message, and after receiving the solicitation message, determine, based on information carried in the solicitation message, whether the service requirement of the UE 1 is met. For example, if determining that the service requirement of the UE 1 is met, the UE 2 and the UE 3 send response messages to the UE 1. After receiving the response messages sent by the UE 2 and the UE 3, the UE 1 may select one of the UE 2 and the UE 3 to establish a unicast connection.

It should be understood that the two discovery models in the foregoing discovery process are merely examples. Discovery models in the discovery process in embodiments of this application are not limited to the foregoing two examples, and may alternatively include another new discovery model that appears as technologies develop. Therefore, the two discovery models shown above should not be understood as a limitation on implementation of this application.

### (2) Unicast connection establishment

For example, in a unicast connection establishment process, a terminal device initiating a unicast connection establishment procedure may be referred to as an initiating terminal (initiating UE), for example, a monitoring terminal in a first discovery model and a discoverer terminal in a second discovery model. A peer end of the initiating terminal may be referred to as a target terminal (target UE), for example, an announcing terminal in the first discovery model and a discoveree terminal in the second discovery model. For example, after a discovery process, the initiating terminal may determine a target terminal with which a unicast connection can be established, and initiate a unicast connection establishment procedure.

For example, after the discovery process, the initiating terminal may determine a source L2 ID used for the unicast connection and a destination L2 ID of the target terminal. For example, the destination L2 ID may be obtained based on the discovery process. After determining the source L2 ID and the destination L2 ID, the initiating terminal sends a direct communication request (direct communication request, DCR) message to the target terminal. The DCR message may carry the source L2 ID, the destination L2 ID, and user information (User Info). After receiving the DCR message, the target terminal stores the source L2 ID and the destination L2 ID, and associates the source L2 ID and the destination L2 ID with a current unicast connection context. For example, the target terminal may determine, based on the user information included in the DCR message, whether to accept the direct communication request of the initiating terminal. If the target terminal determines to accept the direct communication request, the target terminal sends a direct communication accept (direct communication accept, DCA) message to the initiating terminal (as shown in FIG. 4A). If the target terminal determines not to accept the direct communication request, the target terminal sends a direct communication reject (direct communication reject) message to the initiating terminal (as shown in FIG. 4B).

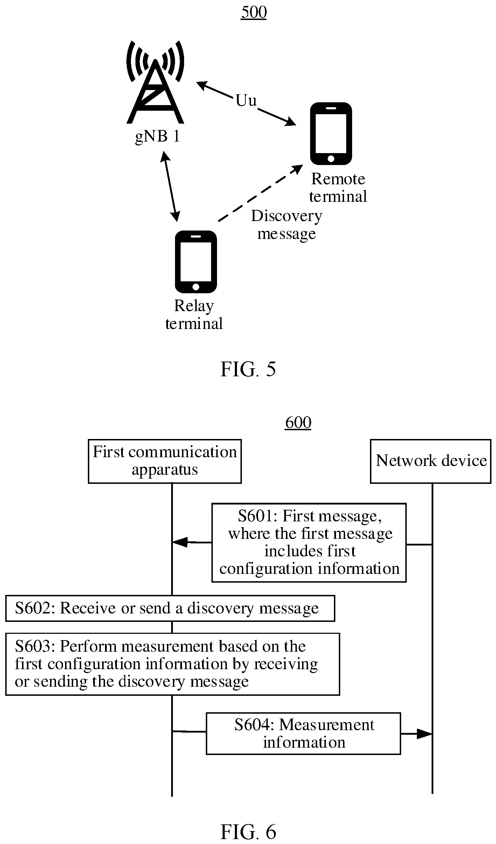

In a U2N relay scenario, remote UE may perform measurement reporting based on a configuration of a base station, and the base station performs mobility management of the remote UE based on a measurement result. The mobility management includes direct-to-indirect (direct-to-indirect) switching, indirect-to-direct (indirect-to-direct) switching, indirect-to- indirect (indirect-to-indirect) switching, and the like of the remote UE. The direct-to-indirect switching is switching remote UE in a connected state from direct communication with a base station to communication with the base station by using relay UE. As shown in FIG. 5, when directly communicating with a base station, remote UE measures signal quality of a current serving cell and signal quality of a sidelink between the remote UE and neighboring relay UE based on a measurement configuration of the base station, and performs measurement reporting based on the measurement configuration. On one hand, the base station indicates, based on a measurement result reported by the remote UE, the remote UE to switch to proper relay UE. In a process in which the remote UE performs direct-to-indirect switching, when the remote UE receives a measurement configuration of the relay UE sent by the base station, the remote UE needs to perform measurement and report measurement information. On the other hand, if a Uu RSRP (an RSRP of a Uu interface between the remote UE and the base station) of the remote UE does not meet a threshold condition configured by the base station or preconfigured for receiving/sending a discovery message, the remote UE cannot measure signal quality of the neighboring relay UE by receiving/sending the discovery message. Therefore, how to resolve a conflict between different configurations of the remote terminal becomes an urgent problem to be resolved.

FIG. 6 is a schematic flowchart of a communication method according to an embodiment of this application. The flowchart shown in FIG. 6 relates to a first communication apparatus and a network device. The communication method includes but is not limited to the following steps.

S601: Receive a first message from the network device, where the first message includes first configuration information.

The first communication apparatus receives the first message from the network device. Optionally, the first communication apparatus may be remote UE, and the first configuration information may be measurement configuration information of relay UE delivered by the network device. The measurement configuration information may include information such as a measurement object, a measurement reporting configuration, a measurement gap (GAP), and a measurement identity (identity, ID). The measurement gap is a time period during which a terminal device performs measurement on another frequency after leaving a current frequency.

S602: Receive or send a discovery (discovery) message.

The first communication apparatus receives the discovery message from a second communication apparatus or sends the discovery message to a second communication apparatus. Optionally, the first communication apparatus may be the remote UE, and the second communication apparatus is the relay UE.

S603: Perform measurement based on the first configuration information by receiving or sending the discovery message.

The measurement is measurement on a communication link between the first communication apparatus and the second communication apparatus. Optionally, the first communication apparatus may be the remote UE, and the second communication apparatus is the relay UE.

For example, the remote UE measures a signal of a sidelink between the remote UE and the relay UE based on a measurement configuration of the relay UE delivered by the network device. The measurement configuration of the relay UE indicates frequencies on which the remote UE measures a sidelink signal quality of the relay UE. The relay UE and the remote UE may be in a same serving cell, or may be in different serving cells. Optionally, the remote UE may measure the signal of the sidelink between the remote UE and the relay UE by receiving/sending the discovery message (discovery message). In other words, after receiving the measurement configuration, the remote UE may trigger receiving/sending of the discovery message, and does not need to determine that a Uu RSRP of the remote UE is less than a first threshold. Optionally, a measurement quantity that is measured by the remote UE and that is of the sidelink between the remote UE and the relay UE may be: a reference signal received power (reference signal received power, RSRP), a received signal strength indicator (received signal strength indicator, RSSI), reference signal received quality (reference signal received quality, RSRQ), or a signal to interference plus noise ratio (signal to interference plus noise ratio, SINR).

S604: Send measurement information to the network device.

Optionally, the remote UE may send measured RSRP information to the network device, and the network device determines, based on the RSRP information, whether to switch the remote UE from a direct connection to an indirect connection in which a connection to a base station is implemented via the relay UE.

Optionally, the remote UE may send measured RSSI information, measured RSRQ information, or measured SINR information to the network device. This is not limited herein. According to the communication method and the apparatuses provided in this embodiment of this application, the remote UE performs measurement and reporting based on the received first configuration information. This is not constrained by a threshold condition configured by the base station or preconfigured for receiving/sending the discovery message. In this way, a problem of a conflict between different configurations of the remote terminal is resolved.

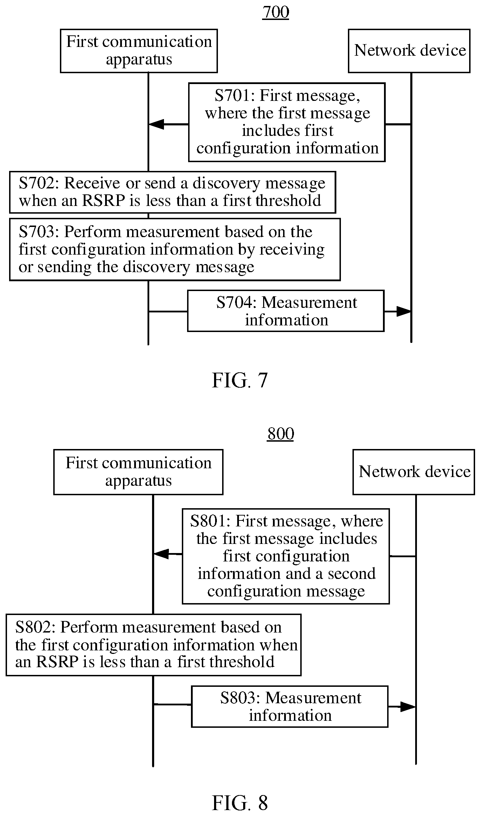

FIG. 7 is a schematic flowchart of a communication method according to an embodiment of this application. The flowchart shown in FIG. 7 relates to a first communication apparatus and a network device. The communication method includes but is not limited to the following steps.

S701: Receive a first message from the network device, where the first message includes first configuration information.

The first communication apparatus receives the first message from the network device. Optionally, the first communication apparatus may be remote UE, and the first configuration information may be measurement configuration information of relay UE delivered by the network device. The measurement configuration information may include information such as a measurement object, a measurement reporting configuration, a measurement gap (GAP), and a measurement identity (identity, ID). The measurement gap is a time period during which a terminal device performs measurement on another frequency after leaving a current frequency.

S702: The first communication apparatus receives or sends a discovery message when an RSRP is less than a first threshold.

The RSRP is an RSRP of an air interface between the first communication apparatus and the network device. The measurement is measurement on a communication link between the first communication apparatus and a second communication apparatus. The first threshold may be delivered by the network device, or may be preset. Optionally, the first communication apparatus may be the remote UE, and the second communication apparatus is the relay UE.

For example, when receiving a measurement configuration of the relay UE delivered by the network device, the remote UE further needs to determine the RSRP of the air interface between the remote UE and the network device, for example, a Uu RSRP. When the Uu RSRP is less than the first threshold, it indicates that current signal quality of a communication link between the remote UE and the network device is poor, and the remote UE is triggered to receive/send the discovery message. The remote UE may search for neighboring proper relay UE by receiving/sending the discovery message (discovery message).

S703: The first communication apparatus performs measurement based on the first configuration information by receiving or sending the discovery message.

For example, the remote UE measures a signal of a sidelink between the remote UE and the relay UE based on the delivered measurement configuration of the relay UE, selects relay UE meeting a measurement reporting condition, and reports a measurement result corresponding to the relay UE to the network device. The relay UE and the remote UE may be in a same serving cell, or may be in different serving cells. Optionally, the remote UE may measure the signal of the sidelink between the remote UE and the relay UE by receiving/sending the discovery message (discovery message). Optionally, a measurement quantity of the sidelink between the remote UE and the relay UE may be: a reference signal received power (reference signal received power, RSRP), a received signal strength indicator (received signal strength indicator, RSSI), reference signal received quality (reference signal received quality, RSRQ), or a signal to interference plus noise ratio (signal to interference plus noise ratio, SINR).

S704: Send measurement information to the network device.

Optionally, the remote UE may send measured RSRP information of the sidelink between the remote UE and the relay UE to the network device, and the network device determines, based on the RSRP information, whether to switch the remote UE from a direct connection to an indirect connection via the relay UE.

Optionally, the remote UE may send measured RSSI information, measured RSRQ information, or a measured SINR to the network device.

According to the communication method and the apparatuses provided in this embodiment of this application, the remote UE performs measurement and reporting based on the received first configuration information, and detects whether a constraint of a threshold condition configured by a base station or preconfigured for receiving/sending the discovery message is met. In this way, a problem of a conflict between different configurations of the remote terminal is resolved.

FIG. 8 is a schematic flowchart of a communication method according to an embodiment of this application. The flowchart shown in FIG. 8 relates to a first communication apparatus and a network device. The communication method includes but is not limited to the following steps.

S801: The first communication apparatus receives a first message from the network device, where the first message includes first configuration information and a second configuration message.

Optionally, the first communication apparatus may be remote UE, and the first configuration information may be measurement configuration information of relay UE delivered by the network device. The measurement configuration information may include information such as a measurement object, a measurement reporting configuration, a measurement gap (GAP), and a measurement identity (identity, ID). The measurement gap is a time period during which a terminal device performs measurement on another frequency after leaving a current frequency.

The second configuration message is used to reconfigure or release a first threshold. The first threshold is used to determine whether the first communication apparatus can receive/send a discovery message, and perform measurement reporting based on the discovery message.

For example, when receiving a measurement configuration of the relay UE delivered by the network device, the remote UE further needs to determine an RSRP of an air interface between the remote UE and the network device, for example, a Uu RSRP. When the Uu RSRP is less than the first threshold, it indicates that current signal quality of a communication link between the remote UE and the network device is poor, and the remote UE is triggered to receive/send the discovery message. The remote UE may search for neighboring proper relay UE by receiving/sending the discovery message (discovery message).

The network device may set the first threshold to an infinite threshold, or select a value large enough to enable the remote UE to receive/send the discovery message.

S802: The first communication apparatus performs measurement based on the first configuration information when the RSRP is less than the first threshold.

The RSRP is an RSRP of an air interface between the first communication apparatus and the network device. The measurement is measurement on a communication link between the first communication apparatus and a second communication apparatus. The first threshold may be delivered by the network device, or may be preset. Optionally, the first communication apparatus may be the remote UE, and the second communication apparatus is the relay UE. When the first threshold is infinite or large enough, the RSRP is less than the first threshold. In other words, a condition for receiving/sending the discovery message by the remote UE is met. In this case, the first communication apparatus may perform measurement based on the first configuration information. When the first threshold is released, the first communication apparatus may not need to consider a relationship between the RSRP and the first threshold, or directly consider that a condition for receiving/sending discovery by the remote UE is met, so that the remote UE may perform measurement based on the first configuration information.

S803: The first communication apparatus sends measurement information to the network device.

Optionally, the remote UE may send measured RSRP information of a sidelink between the remote UE and the relay UE to the network device, and the network device determines, based on the RSRP information, whether to switch the remote UE from direct communication to indirect communication via the relay UE.

Optionally, the remote UE may send measured RSSI information, measured RSRQ information, or a measured SINR to the network device.

According to the communication method and the apparatuses provided in this embodiment of this application, a threshold condition for receiving/sending the discovery message is configured by a base station, so that the remote UE meets a constraint of the threshold condition for receiving/sending the discovery message. In this way, a problem of a conflict between different configurations of the remote terminal is resolved.

In a process in which the remote UE performs direct-to-indirect switching, when the base station indicates the remote UE to switch to relay UE in an idle (IDLE) state or an inactive (INACTIVE) state, the remote UE sends an RRCReconfigurationComplete message to the relay UE after receiving a switching configuration of the network device. In this case, because the relay UE has not received a sidelink relay adaptation protocol (Sidelink Relay Adaptation Protocol, SRAP) configuration of the network device, incorrect packet discarding may occur.

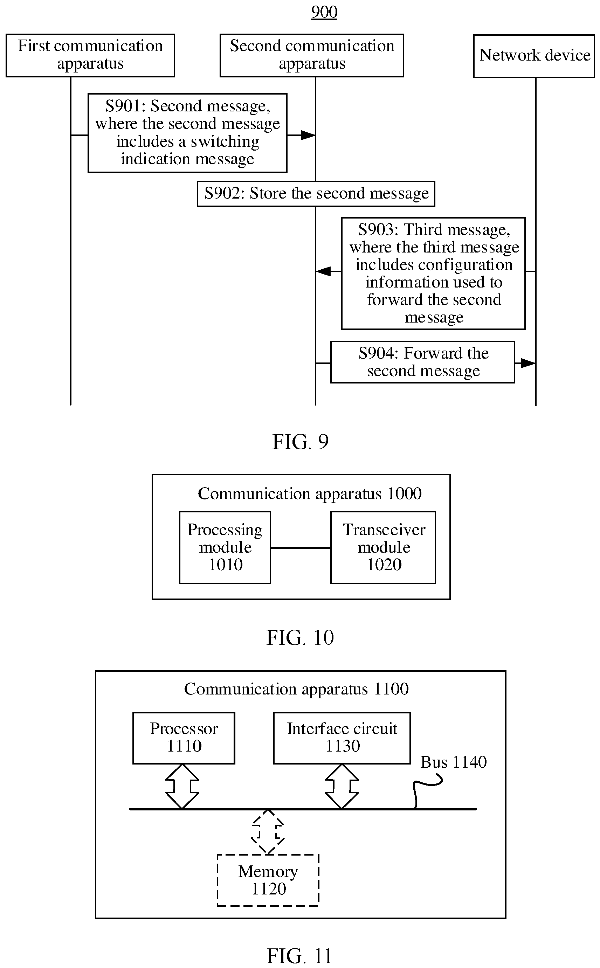

FIG. 9 is a schematic flowchart of a communication method according to an embodiment of this application. The flowchart shown in FIG. 9 relates to a first communication apparatus, a second communication apparatus, and a network device. The communication method includes but is not limited to the following steps.

S901: The first communication apparatus sends a second message to the second communication apparatus, where the second message includes switching indication information.

The first communication apparatus may be remote UE, and the second communication apparatus may be relay UE. After the first communication apparatus completes measurement and reporting according to the foregoing method, the network device indicates the first communication apparatus to perform switching. The first communication apparatus sends the second message to the second communication apparatus. The second message includes the switching indication information, and the switching indication information indicates that switching of the first communication apparatus from the network device to the second communication device is completed. The second message may be a radio resource control (radio resource control, RRC) message, or may be a protocol data unit (PDU), for example, a sidelink relay adaptation protocol (Sidelink Relay Adaptation Protocol, SRAP) PDU. The switching indication information may be RRCReconfigurationComplete.

Optionally, the second message further includes a local identity (local ID) of the first communication apparatus and a bearer identity corresponding to the second message.

Optionally, before the first communication apparatus sends the second message to the second communication apparatus, the first communication apparatus may further receive a first message from the network device. The first message includes a first configuration message. The first communication apparatus may further receive or send a discovery message, and measure, based on the first configuration message, signal quality of a sidelink between the first communication apparatus and the second communication apparatus by receiving or sending the discovery message. The first communication apparatus further sends measurement information of the measurement to the network device.

S902: The second communication apparatus stores the second message.

After receiving the second message, if the second communication apparatus has not received the following third message, the second communication apparatus stores the second message. Because the second communication apparatus is in an IDLE state or an INACTIVE state in this case, the second communication apparatus requests to enter a connected state with the network device.

Optionally, the second communication apparatus sets a timer, starts the timer when the second communication apparatus receives the second message, and discards the second message if the timer expires and the second communication apparatus still does not receive the third message. This can avoid a waste of buffer resources.

Optionally, the second communication apparatus sets a timer, and starts the timer when receiving the second message. If the timer expires and the second communication apparatus still does not receive the third message, the relay UE may further send first indication information to the first communication apparatus. The first indication information indicates the remote UE to perform reestablishment or reselect relay UE. This can avoid a waste of buffer resources.

A value of the timer may be set by the relay UE, or may be set by the remote UE, for example, determined based on a quality of service (Quality of Service, QoS) requirement, and sent to the relay UE.

Optionally, the second communication apparatus determines, based on the bearer identity corresponding to the second message, that the second message includes the switching indication information.

S903: The second communication apparatus receives the third message from the network device, where the third message includes configuration information used to forward the second message.

For example, after connected to the network device, the second communication apparatus may further send an RRC message, for example, an SUI (sidelinkUEInformation) message, to the network device. The SUI message includes identity information of the remote UE and/or identity information of the relay UE. After receiving the SUI message, the network device sends the third message to the second communication apparatus. The third message includes the configuration message used to forward the second message. For example, the third message includes SRAP configuration information. The SRAP configuration information includes a mapping relationship among the local ID of the first communication apparatus, a bearer identity corresponding to data of the first communication apparatus, and a Uu RLC channel.

S904: The second communication apparatus forwards the second message to the network device.

After receiving a SRAP configuration corresponding to the second message, the second communication apparatus may directly forward the second message to the network device based on the mapping relationship, included in the SRAP configuration, among the local ID of the first communication apparatus, the bearer identity corresponding to the data of the first communication apparatus, and the Uu RLC channel, or may process the second message and then send a processed second message to the network device.

In a possible implementation, the first communication apparatus sends second data to the second communication apparatus, and the second data is the SRAP PDU.

The first communication apparatus may be remote UE, and the second communication apparatus may be relay UE.

The second message may include the radio resource control (radio resource control, RRC) message, or may include communication data. Optionally, the second message further includes the local identity (local ID) of the first communication apparatus, the radio resource control (radio resource control, RRC) message, or a bearer identity corresponding to the communication data.

In a possible implementation, the second communication apparatus receives the second data, obtains the local identity (local ID) and the bearer identity that are included in the second data, and performs subsequent processing on a data packet, for example, whether to perform packet discarding or forward the second message to the network device based on the SRAP configuration information.

After receiving the second data, the relay UE obtains information about the local ID and the bearer identity in a packet header, and needs to forward the second data to the network device based on the configuration. If the relay UE has no corresponding SRAP configuration, that is, the relay UE does not have information about the mapping relationship among the local ID, bearer identity information, and the Uu RLC channel, the relay UE performs packet discarding.

If the relay UE receives the second data from a default RLC channel corresponding to an SRB 1, or the bearer identity included in the second data is a bearer identity corresponding to an SRB1, the second data includes an RRCReconfigurationComplete message. In addition, the relay UE is in an idle state when receiving the second data. In this case, the relay UE has not received the SRAP configuration configured by a base station, and the relay UE does not forward the SRAP configuration of the second data. In this case, if the relay UE performs packet discarding in the foregoing manner, incorrect packet discarding occurs.

Therefore, in another possible implementation, if the relay UE receives the second data from a default RLC channel corresponding to an SRB 1, or the bearer identity included in the second data is a bearer identity corresponding to an SRB1, the relay UE does not perform packet discarding.

Optionally, the second communication apparatus sets a timer, starts the timer when the second communication apparatus receives the second message, and discards the second message if the timer expires and the second communication apparatus still does not receive the third message. This can avoid a waste of buffer resources.

Optionally, the second communication apparatus sets a timer, and starts the timer when receiving the second message. If the timer expires and the second communication apparatus still does not receive the third message, the relay UE may further send first indication information to the first communication apparatus. The first indication information indicates the remote UE to perform reestablishment or reselect relay UE. This can avoid a waste of buffer resources.

A value of the timer may be set by the relay UE, or may be set by the remote UE, for example, determined based on a quality of service (Quality of Service, QoS) requirement, and sent to the relay UE.

In a possible implementation, the second communication apparatus receives the third message from the network device. The third message includes the configuration information used to forward the second message.

The third message is an SUI message sent by the second communication apparatus to the base station, or a 1^{st} RRC message received by the second communication apparatus from the base station after the second message is received. For example, the third message includes the SRAP configuration information.

In a possible implementation, the second communication apparatus forwards the second message to the network device.

The second communication apparatus may directly forward the second message to the network device, or may process the second message and then send a processed second message to the network device.

If the third message does not include the information about the mapping relationship that is included in the second message and that is among the local ID, the bearer identity, and the Uu RLC channel, the second communication apparatus performs packet discarding on the second message.

For ease of understanding, the following specific example is used as an example.

After generating an RRCReconfigurationComplete message, the remote UE includes the RRCReconfigurationComplete message on an SRB 1 of the remote UE. After an SRAP layer of the remote UE receives a PDCP PDU from a PDCP entity corresponding to the SRB1, a local ID and a bearer identity of the remote UE are added to an SRAP PDU header, and an SRAP PDU data packet is submitted, based on a configuration of the base station, to an SRAP layer on a relay UE side through a PC5 RLC channel for processing. After receiving the SRAP PDU data packet, the SRAP layer of relay UE searches for an SRAP configuration sl-SRAP-Config-Relay. When finding that there is no corresponding mapping configuration information between the local ID and the bearer identity, the relay UE does not perform packet discarding, or temporarily stores the SRAP PDU data packet. After receiving the SRAP configuration of the base station, the relay UE determines a corresponding Uu RLC channel based on a mapping relationship in the configuration, and forwards the SRAP PDU data packet including the RRC message to the base station. Further, the relay UE may keep storing the data packet due to the lack of the configuration of the base station. For example, in a scenario in which the relay UE fails to establish a connection, buffer overheads are introduced. Therefore, it may be limited to a case in which after receiving the SRAP PDU data packet, connected to the base station, or reporting an SUI message, if receiving no corresponding SRAP configuration from the 1^{st} RRC message received from the base station, the relay UE performs packet discarding. In another possible implementation, the relay UE may set a timer T, and start the timer when receiving the foregoing data from the remote UE. If the SRAP configuration of the base station is still not received when the timer expires, the data packet is discarded. Optionally, in this case, the relay UE may further indicate the remote UE to perform reestablishment or reselect relay UE. A value T of the timer may be configured by the relay UE based on implementation or determined by the remote UE based on a QoS requirement of data, and indicated to the relay UE in a packet.

It should be understood that the foregoing solution may alternatively be applied to a general scenario, and is not necessarily limited to a scenario in which the remote UE is switched to idle/inactive relay UE. In other words, regardless of uplink transmission or downlink transmission, when the relay UE receives a SRAP PDU but does not have a corresponding SRAP PDU configuration (sl-SRAP-Config-Relay configuration information is needed for the uplink transmission, and sl-SRAP-Config-Remote configuration information is needed for the downlink transmission), the relay UE stores the SRAP PDU and starts the timer T. If the relay UE receives the corresponding SRAP configuration from the base station within duration of the timer T, the relay UE forwards the data based on the configuration. If the relay UE does not receive the needed configuration before the timer expires, the relay UE discards the data.

Optionally, the timer may be configured by the base station, or may be determined by the relay UE or the remote UE based on implementation.

For the uplink transmission, in a possible implementation method, the timer T may be configured by the base station based on QoS requirements corresponding to different bearers of the remote UE. The base station may configure a timer T for each PC5 RLC channel of the remote UE, for example, {PC5 RLC channel 1, T 1; PC5 RLC channel2, T2...}, or configure a unified timer T for all bearer data. This is not limited herein. Before sending the data, the remote UE indicates the timer T to the relay UE by using a sidelink configuration, for example, sends {PC5 RLC channel, T 1; PC5 RLC channel, T2...} configuration information to the relay UE by using an RRCReconfigurationSidelink message. Optionally, the remote UE may alternatively indicate the timer to the relay UE in the packet.

In another possible implementation method, the remote UE may determine, based on QoS requirements corresponding to different PC5 RLC channels configured by the base station, timers corresponding to data on the different PC5 RLC channels. Similarly, the remote UE sends, to the relay UE by using sidelink RRC signaling, the determined timers T corresponding to the different PC5 RLC channels. In addition, the relay UE may alternatively determine a timer T; or the base station configures a universal timer T, and sends the timer T to the UE by using a broadcast message (for example, a SIB).

For the downlink transmission, the relay UE may receive a timer T indicated by the base station. The base station may configure the timer T based on a granularity of the remote UE. In other words, the base station sends {local ID 1, T1; local ID 2, T2...} configuration information to the relay UE. Alternatively, the base station may configure the timer T based on a granularity of a Uu RLC channel, for example, send {Uu RLC channel 1, T1; Uu RLC channel 2, T2...} configuration information to the relay UE. Optionally, the relay UE may determine the timer T.

According to the communication method and apparatuses provided in this embodiment of this application, when the relay UE receives the RRCReconfigurationComplete message but has not received the SRAP configuration of the network device, the RRCReconfigurationComplete message can be stored to avoid incorrect packet discarding.

As shown in FIG. 10, a communication apparatus 1000 includes a processing module 1010 and a transceiver module 1020. The communication apparatus 1000 is configured to implement a function of the first communication apparatus in the embodiment corresponding to FIG. 6, FIG. 7, FIG. 8, or FIG. 9.

When the communication apparatus 1000 is configured to implement the function of the first communication apparatus in the method embodiment shown in FIG. 6, FIG. 7, FIG. 8, or FIG. 9, an example is provided as follows.

The transceiver module 1020 is configured to receive a first message from a network device. The first message includes first configuration information.

Optionally, the transceiver module 1020 is further configured to send measurement information of the measurement to the network device.

Optionally, the transceiver module 1020 is further configured to receive or send a discovery (discovery) message.

Optionally, the transceiver module 1020 is further configured to send a second message to the second communication apparatus. The second message includes switching indication information, the switching indication information indicates that switching is completed, and the switching is switching of a first communication apparatus from the network device to a second communication apparatus.

The processing module 1010 is configured to perform measurement based on the first configuration information by receiving or sending the discovery message. The measurement is measurement on signal quality of a sidelink between the first communication apparatus and the second communication apparatus.

Optionally, the processing module 1010 is further configured to receive or send the discovery message when a reference signal received power (RSRP) is less than a first threshold.

Optionally, the processing module 1010 is further configured to receive or send the discovery (discovery) message when the first configuration message is received.

The foregoing is only a part of an example when the communication apparatus 1000 is configured to implement the function of the first communication apparatus in the method embodiment shown in FIG. 6, FIG. 7, FIG. 8, or FIG. 9. For functions of the processing module 1010 and the transceiver module 1020 in the communication apparatus 1000, refer to operations of the access network device in the method embodiment shown in FIG. 6, FIG. 7, FIG. 8, or FIG. 9.

The communication apparatus 1000 may be alternatively configured to implement a function of the network device in the method embodiment shown in FIG. 6, FIG. 7, FIG. 8, or FIG. 9. When the communication apparatus 1000 is configured to implement the function of the network device in the method embodiment shown in FIG. 6, FIG. 7, FIG. 8, or FIG. 9, an example is provided as follows.

The transceiver module 1020 is configured to send a first message to a first communication apparatus. The first message includes first configuration information, and the first configuration information indicates the first communication apparatus to perform measurement. The first message further includes second configuration information, and the second configuration information is used to reconfigure a first threshold condition or release a first threshold condition.

Optionally, the transceiver module 1020 is further configured to send a third message to a second communication apparatus. The third message includes configuration information used to forward a second message.

The processing module 1010 is configured to determine the first configuration information and the second configuration information.

The foregoing is only a part of an example when the communication apparatus 1000 is configured to implement the function of the network device in the method embodiment shown in FIG. 6, FIG. 7, FIG. 8, or FIG. 9. For functions of the processing module 1010 and the transceiver module 1020 in the communication apparatus 1000, refer to operations of the network device in the method embodiment shown in FIG. 6, FIG. 7, FIG. 8, or FIG. 9.

The communication apparatus 1000 may be alternatively configured to implement a function of the second communication apparatus in the method embodiment shown in FIG. 9. When the communication apparatus 1000 is configured to implement the function of the second communication apparatus in the method embodiment shown in FIG. 9, an example is provided as follows.

The transceiver module 1020 is configured to receive a second message from a first communication apparatus. The second message includes switching indication information, the switching indication information indicates that switching is completed, and the switching is switching of the first apparatus from a network device to a second communication apparatus.

Optionally, the transceiver module 1020 is further configured to receive a third message from the network device. The third message includes configuration information used to forward the second message.

The processing module 1010 is configured to store the second message.

Optionally, the processing module 1010 is further configured to determine, based on a bearer identity corresponding to the second message, that the second message includes the switching indication information.

Optionally, the processing module 1010 is further configured to set a timer, start the timer when the second communication apparatus receives the second message, and discard the second message if the timer expires and the second communication apparatus does not receive the third message.

Optionally, the processing module 1010 is further configured to set a timer, start the timer when the second communication apparatus receives the second message, and send first indication information to the first communication apparatus if the timer expires and the second communication apparatus does not receive the third message. The first indication information indicates the first communication apparatus to reselect a relay device.

The foregoing is only a part of an example when the communication apparatus 1000 is configured to implement the function of the second communication apparatus in the method embodiment shown in FIG. 9. For functions of the processing module 1010 and the transceiver module 1020 in the communication apparatus 1000, refer to operations of the second communication apparatus in the method embodiment shown in FIG. 9.

FIG. 11 is another block diagram of a communication apparatus according to an embodiment of this application. As shown in FIG. 11, the communication apparatus 1100 includes a processor 1110 and an interface circuit 1130. The processor 1110 and the interface circuit 1130 are coupled to each other. It may be understood that the interface circuit 1130 may be a transceiver or an input/output interface.

Optionally, the communication apparatus 1100 may further include a memory 1120, configured to store instructions executed by the processor 1120, store input data needed by the processor 1110 to run the instructions, or store data generated after the processor 1110 runs the instructions.

When the communication apparatus 1100 is configured to implement the function of the first communication apparatus, the second communication apparatus, or the network device shown in FIG. 6, FIG. 7, FIG. 8, or FIG. 9, the processor 1110 is configured to implement a function of the processing module 1010, and the interface circuit 1130 is configured to implement a function of the transceiver module 1020.

It may be understood that there may be one or more processors 1110, interface circuits 1130, or memories 1120. This is not limited in this specification.

Optionally, the communication apparatus 1100 further includes a bus 1140. The processor 1110, the interface circuit 1130, and the memory 1120 may communicate with each other through the bus 1140.

An embodiment of this application further provides a system chip. The system chip includes an input/output interface, at least one processor, at least one memory, and a bus. The at least one memory is configured to store instructions, and the at least one processor is configured to invoke the instructions in the at least one memory, to perform operations of the methods in the foregoing aspects.

In this embodiment of this application, it should be noted that the foregoing method embodiments in embodiments of this application may be applied to the processor, or may be implemented by the processor. The processor may be an integrated circuit chip and has a signal processing capability. In an implementation process, steps in the foregoing method embodiments can be completed by using a hardware integrated logic circuit in the processor, or by using instructions in a form of software. The processor may be a general purpose processor, a digital signal processor (digital signal processor, DSP), an application specific integrated circuit (application specific integrated Circuit, ASIC), a field programmable gate array (field programmable gate array, FPGA) or another programmable logic device, a discrete gate or a transistor logic device, or a discrete hardware component. The methods, the steps, and the logic block diagrams disclosed in embodiments of this application may be implemented or performed. The general purpose processor may be a microprocessor, or the processor may be any conventional processor or the like. The steps of the methods disclosed with reference to embodiments of this application may be directly embodied as being performed by a hardware decoding processor, or may be performed by a combination of hardware and software modules in the decoding processor. The software module may be located in a mature storage medium in the art, such as a random access memory, a flash memory, a read-only memory, a programmable read-only memory, an electrically erasable programmable memory, a register, or the like. The storage medium is located in the memory. The processor reads information in the memory, and completes the steps of the foregoing methods in combination with hardware of the processor.

It should be understood that the memory in this embodiment of this application may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and method described in this specification includes but is not limited to these memories and any other memory of a proper type.

All or some of the methods provided in the foregoing embodiments may be implemented by software, hardware, firmware, or any combination thereof. When the software is used to implement the foregoing embodiments, all or some of the foregoing embodiments may be implemented in a form of a computer program product. The computer program product may include one or more computer instructions. When the computer program instructions are loaded and executed on a computer, the procedure or functions according to embodiments of this application are all or partially generated. The computer may be a general purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, microwave, or the like) manner. The computer-readable storage medium may be any usable medium accessible to the computer, or a data storage device, such as a server, a data center, or the like integrating one or more usable media that are included. The usable medium may be a magnetic medium (for example, a floppy disk, a hard disk, or a magnetic disk), an optical medium (for example, a DVD), a semiconductor medium (for example, a solid state disk (SSD)), or the like.

A person of ordinary skill in the art may be aware that, with reference to examples described in embodiments disclosed in this specification, units and algorithm steps can be implemented by electronic hardware or a combination of computer software and electronic hardware. Whether the functions are performed by the hardware or the software depends on particular applications and design constraints of the technical solutions. A person skilled in the art may use different methods to implement the described functions for each particular application, but it should not be considered that this implementation goes beyond the scope of this application.

It may be clearly understood by a person skilled in the art that, for the purpose of convenient and brief description, for detailed working processes of the foregoing system, apparatus, and unit, refer to corresponding processes in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be another division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatus or units may be implemented in electronic, mechanical, or other forms.

Units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units may be integrated into one unit.

When the function is implemented in a form of a software function unit and sold or used as an independent product, the integrated unit may be stored in a computer-readable storage medium. Based on such an understanding, the technical solutions in this application essentially, or a part contributing to a conventional technology, or some of the technical solutions may be embodied in a form of a software product. The computer software product is stored in a storage medium and includes several instructions for enabling a computer device (which may be a personal computer, a server, a network device, or the like) to perform all or some of the steps of the methods in embodiments of this application. The foregoing storage medium includes any medium that can store program code, such as a USB flash disk, a removable hard disk, a read-only memory, a random access memory, a magnetic disk, an optical disc, or the like.

The foregoing descriptions are merely specific implementations of this application, but are not intended to limit the protection scope of this application. A modification or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving a first message from a network device, wherein the first message comprises first configuration information;
receiving or sending a discovery (discovery) message;
performing measurement based on the first configuration information by receiving or sending the discovery message, wherein the measurement is measurement on signal quality of a sidelink between a first communication apparatus and a second communication apparatus; and
sending measurement information of the measurement to the network device.

2. The method according to claim 1, wherein the receiving or sending a discovery message comprises:
receiving or sending the discovery message when a reference signal received power (RSRP) is less than a first threshold, wherein the RSRP is an RSRP of an air interface between the first communication apparatus and the network device.

3. The method according to claim 1 or 2, wherein the receiving or sending a discovery message comprises:
receiving or sending the discovery (discovery) message when the first configuration message is received.

4. The method according to any one of claims 1 to 3, wherein the first message further comprises second configuration information, and the second configuration information is used to reconfigure the first threshold or release the first threshold.

5. The method according to any one of claims 1 to 4, wherein the method further comprises:
sending a second message to the second communication apparatus, wherein the second message comprises switching indication information, the switching indication information indicates that switching is completed, and the switching is switching of the first communication apparatus from the network device to the second communication apparatus.

6. The method according to claim 5, wherein the second message comprises a local identity (local ID) of the first communication apparatus and a bearer identity corresponding to the second message.

7. A communication method, comprising:
sending a first message to a first communication apparatus, wherein the first message comprises first configuration information, and the first configuration information indicates the first communication apparatus to perform measurement, wherein
the first message further comprises second configuration information, and the second configuration information is used to reconfigure a first threshold or release a first threshold.

8. The method according to claim 7, wherein the method further comprises:
sending a third message to a second communication apparatus, wherein the third message comprises configuration information used to forward a second message.

9. A communication method, comprising:
receiving a second message from a first communication apparatus, wherein the second message comprises switching indication information, the switching indication information indicates that switching is completed, and the switching is switching of the first communication apparatus from a network device to a second communication apparatus;
storing the second message; and
receiving a third message from the network device, wherein the third message comprises configuration information used to forward the second message, and the configuration information used to forward the second message is a sidelink relay adaptation protocol (SRAP) configuration.

10. The method according to claim 9, wherein the second message comprises a local identity (local ID) of the first communication apparatus and a bearer identity corresponding to the second message.

11. The method according to claim 10, wherein the method further comprises:
determining, based on the bearer identity corresponding to the second message, that the second message comprises the switching indication information.

12. The method according to any one of claims 9 to 11, wherein the third message is:
a 1^{st} radio resource control (RRC) message received from the network device after the second message is received;
a 1^{st} RRC message received after the second communication apparatus enters a connected state from an idle (idle) state or an inactive (inactive) state; or
a 1^{st} RRC message comprising the sidelink relay adaptation protocol (SRAP) configuration.

13. The method according to any one of claims 9 to 12, wherein the configuration information used to forward the second message comprises a mapping relationship among the local ID of the first communication apparatus, the bearer identity corresponding to the second message, and a radio link control (RLC) bearer.

14. The method according to any one of claims 9 to 13, wherein the method further comprises:
setting a timer, starting the timer when the second communication apparatus receives the second message, and discarding the second message if the timer expires and the second communication apparatus does not receive the third message.

15. The method according to any one of claims 9 to 13, wherein the method further comprises:
setting a timer, starting the timer when the second communication apparatus receives the second message, and sending first indication information to the first communication apparatus if the timer expires and the second communication apparatus does not receive the third message, wherein the first indication information indicates the first communication apparatus to reselect a relay device.

16. A communication apparatus, comprising a module configured to perform the method according to any one of claims 1 to 6.

17. A communication apparatus, comprising a module configured to perform the method according to claim 7 or 8.

18. A communication apparatus, comprising a module configured to perform the method according to any one of claims 9 to 15.

19. A communication apparatus, comprising a processor and an interface circuit, wherein the interface circuit is configured to receive a signal from an apparatus other than the apparatus and transmit the signal to the processor, or send a signal from the processor to an apparatus other than the apparatus, and the processor is configured to implement the method according to any one of claims 1 to 6 by using a logic circuit or by executing code instructions.

20. A communication apparatus, comprising a processor and an interface circuit, wherein the interface circuit is configured to receive a signal from an apparatus other than the apparatus and transmit the signal to the processor, or send a signal from the processor to an apparatus other than the apparatus, and the processor is configured to implement the method according to claim 7 or 8 by using a logic circuit or by executing code instructions.

21. A communication apparatus, comprising a processor and an interface circuit, wherein the interface circuit is configured to receive a signal from an apparatus other than the apparatus and transmit the signal to the processor, or send a signal from the processor to an apparatus other than the apparatus, and the processor is configured to implement the method according to any one of claims 9 to 15 by using a logic circuit or by executing code instructions.

22. A computer-readable storage medium, wherein the computer-readable storage medium stores a computer program or instructions, and when the computer program or the instructions are executed by a communication apparatus, the method according to any one of claims 1 to 6, the method according to claim 7 or 8, or the method according to any one of claims 9 to 15 is implemented.

23. A computer program product, wherein when the computer program product is executed by a communication apparatus, the method according to any one of claims 1 to 6, the method according to claim 7 or 8, or the method according to any one of claims 9 to 15 is implemented.

24. A communication system, comprising one or more of the following: the communication apparatuses according to any one of claims 16 to 21.
